# FASCICULE DE BREVET EUROPEEN

(11) **EP 2 867 035 B1**
(45) Date de publication et mention de la délivrance du brevet: **09.05.2018**
(21) Numéro de dépôt: 13731773.1
(22) Date de dépôt: 26.06.2013
(51) Int. Cl.: B60C 9/08, B60C 15/00, B60C 3/04

(54) **ARMATURE DE CARCASSE DE PNEUMATIQUE POUR VEHICULE AGRICOLE**
REIFENKARKASSE FÜR LANDWIRTSCHAFTLISCHEN FAHRZEUG
TIRE CARCASSE FOR AGRICULTURAL VEHICLE

(30) Priorité: 28.06.2012 FR 1256153
(43) Date de publication de la demande: 06.05.2015
(73) Titulaire: Compagnie Générale des Etablissements Michelin, 63000 Clermont-Ferrand (FR)
(72) Inventeur: ORLOWSKI, Claude, F-63040 Clermont-Ferrand Cedex 9 (FR)
(74) Mandataire: Millanvois, Patrick Jacques Jean
(86) Numéro de dépôt international: PCT/EP2013/063359
(87) Numéro de publication internationale: WO 2014/001378

(56) Documents cités:
- EP-A2- 1 013 482
- DE-A1- 19 845 724
- GB-A- 2 092 964
- US-A1- 2004 055 689
- US-A1- 2006 124 215
- US-A1- 2008 006 359

## Description

La présente invention concerne un pneumatique radial pour un véhicule lourd destiné à rouler sur divers types de sol, tel qu'un véhicule de type agricole ou génie civil.

Bien que non limitée à ce type d'application, l'invention sera plus particulièrement décrite en référence à un pneumatique radial, destiné à être monté sur un véhicule agricole automoteur tel qu'une moissonneuse-batteuse ou un épandeur.

Dans ce qui suit, les directions circonférentielle, axiale et radiale désignent respectivement une direction tangente à la surface de roulement du pneumatique selon le sens de rotation du pneumatique, une direction parallèle à l'axe de rotation du pneumatique et une direction perpendiculaire à l'axe de rotation du pneumatique. Par «radialement intérieur, respectivement radialement extérieur», on entend «plus proche, respectivement plus éloigné de l'axe de rotation du pneumatique». Par «axialement intérieur, respectivement axialement extérieur», on entend «plus proche, respectivement plus éloigné du plan équatorial du pneumatique», le plan équatorial du pneumatique étant le plan passant par le milieu de la surface de roulement du pneumatique et perpendiculaire à l'axe de rotation du pneumatique.

Un pneumatique comprend une bande de roulement, destinée à venir en contact avec le sol par l'intermédiaire de la surface de roulement, et reliée par l'intermédiaire de deux flancs à deux bourrelets, assurant la liaison mécanique entre le pneumatique et la jante sur laquelle il est monté.

Un pneumatique radial comprend également une armature de renforcement, comprenant une armature de sommet, radialement intérieure à la bande de roulement, et une armature de carcasse, radialement intérieure à l'armature de sommet.

L'armature de carcasse d'un pneumatique radial pour véhicule lourd de type agricole comprend généralement au moins une couche de carcasse constituée d'éléments de renforcement le plus souvent textiles enrobés dans un matériau polymérique de type élastomère.

Une couche de carcasse est dite retournée, lorsqu'elle comprend une partie principale, reliant les deux bourrelets entre eux et s'enroulant, dans chaque bourrelet, de l'intérieur vers l'extérieur du pneumatique autour d'un élément de renforcement circonférentiel, le plus souvent métallique et enrobé dans au moins un matériau généralement élastomérique ou textile, pour former un retournement ayant une extrémité libre. L'ensemble constitué par l'élément de renforcement circonférentiel et son matériau d'enrobage est usuellement appelé tringle.

Dans le cas d'une couche de carcasse retournée, le retournement, dans chaque bourrelet, permet l'ancrage de la couche de carcasse retournée à la tringle. La portion de tringle en contact avec la couche de carcasse retournée contribue, en particulier au gonflage, à la reprise par couplage des efforts de tension dans la couche de carcasse retournée. Cette contribution à la reprise d'efforts de tension dépend de la rigidité de torsion de la tringle et de la géométrie du retournement. Dans le cas usuel d'une forte rigidité de torsion de la tringle, les efforts de tension au gonflage sont essentiellement repris par la tringle, avec une contribution secondaire du retournement. Dans le cas d'une plus faible rigidité de torsion de la tringle, les efforts de tension sont repris à la fois par couplage avec la tringle et par cisaillement entre le retournement et les matériaux qui lui sont adjacents, ce qui nécessite un retournement suffisamment long, c'est-à-dire dont l'extrémité est suffisamment radialement éloignée du point le plus radialement extérieure de la tringle.

Une couche de carcasse est dite non retournée, lorsqu'elle est constituée uniquement d'une partie principale, reliant les deux bourrelets entre eux sans s'enrouler autour d'une tringle.

Dans le cas d'une couche de carcasse non retournée, chacune des deux portions d'extrémités de ladite couche de carcasse non retournée peut être couplée soit avec le retournement d'au moins une couche de carcasse retournée, soit avec la partie principale d'au moins une couche de carcasse retournée. Par couplage, on entend une zone de recouvrement entre la couche de carcasse non retournée et une couche de carcasse retournée, permettant une reprise des efforts de tension par cisaillement. Dans le cas d'une armature de carcasse comprenant deux couches de carcasse retournées et au moins une couche de carcasse non retournée, chaque extrémité d'une couche de carcasse non retournée peut être intercalée entre les retournements respectifs de deux couches de carcasse retournées, c'est-à-dire qu'elle présente, sur chacune de ses faces axiales, une zone de recouvrement avec un retournement de couche de carcasse retournée.

Les éléments de renforcement de la partie principale d'une couche de carcasse retournée ou non retournée sont sensiblement parallèles entre eux et forment, avec la direction circonférentielle, un angle compris entre 85° et 95°. Les éléments de renforcement d'un retournement d'une couche de carcasse retournée forment un angle, par rapport à la direction circonférentielle, compris entre 75° et 105°.

Un pneumatique pour véhicule agricole automoteur, étant dimensionné pour une charge recommandée, est habituellement gonflé à une pression de gonflage recommandée comprise entre 2.4 et 3.2 bars. Les charges et les pressions de gonflage recommandées, pour une dimension de pneumatique donnée, sont définies, par exemple, par la norme de la European Tyre and Rim Organization (ETRTO).

Un pneumatique pour véhicule agricole automoteur est dit à forte flexion, lorsqu'il a une capacité de charge au moins égale à 1.2 fois la capacité de charge recommandée pour un pneumatique de technologie standard de même dimension, appelé pneumatique de référence, pour une pression égale à la pression du pneumatique de référence. Il permet trois types d'utilisation : en surcharge par rapport au pneumatique de technologie standard, ou en sous-pression par rapport au pneumatique de technologie standard, ou selon toute combinaison intermédiaire. L'intérêt d'une utilisation en surcharge est d'augmenter la productivité des opérations de récolte avec le véhicule agricole. L'intérêt d'une utilisation en sous-pression est de diminuer le compactage des sols et les endommagements des cultures au passage du véhicule agricole. Dans ces conditions d'utilisation à forte flexion, il a été constaté que l'endurance mécanique de l'armature de carcasse était sensiblement diminuée par rapport à une utilisation sous une charge égale à la charge recommandée combinée avec une pression de gonflage égale à la pression de gonflage recommandée.

La flexion d'un pneumatique est couramment caractérisée par une flèche relative, définie comme le rapport de la variation de la hauteur radiale de la section méridienne du pneumatique sur la moitié de la différence entre le diamètre extérieur du pneumatique et le diamètre maximum de la jante mesuré sur le rebord de jante, lorsque le pneumatique passe d'un état non chargé gonflé à un état chargé gonflé. Le diamètre extérieur du pneumatique est mesuré en statique dans un état non chargé gonflé.

Le document WO2004106089 décrit un pneumatique pour véhicule agricole de type tracteur fonctionnant à forte flexion, caractérisée par une flèche élevée, supérieure à 28 %, résultant d'un usage à pression de gonflage réduite par rapport à la pression de gonflage recommandée, en vue de diminuer le compactage des sols et les endommagements des cultures au passage de l'engin agricole. Selon l'invention, le pneumatique est tel que le rapport de forme H/S de la hauteur H du pneumatique sur la largeur axiale maximale S du pneumatique est inférieur à 0,75 et le rapport A/B de la largeur de la bande de roulement A sur la hauteur de flèche B du sommet est supérieur à 17. Ce document montre qu'un choix approprié de la géométrie du pneumatique permet ainsi un usage à forte flexion.

Toutefois une telle solution est difficilement applicable à un pneumatique pour véhicule agricole automoteur dont les dimensions géométriques ne peuvent pas nécessairement être adaptées tel que préconisé dans le document WO2004106089.

Par ailleurs, un pneumatique pour véhicule agricole automoteur est essentiellement conçu pour avoir une capacité de charge élevée, alors qu'un pneumatique pour véhicule de type tracteur, tel que décrit dans le document WO2004106089, est conçu pour pouvoir transmettre à la jante un couple moteur élevé. Les usages respectifs de ces deux types de pneumatiques étant donc différents, la conception, et en particulier les caractéristiques géométriques, ne sont pas aisément transposables d'un pneumatique pour véhicule de type tracteur à un pneumatique pour véhicule agricole automoteur.

Le document EP1013482 montre un pneumatique avec une armature de carcasse comprenant une couche de carcasse retournée et une couche de carcasse non retournée, la distance radiale entre l'extrémité du retournement de chaque couche retournée et le point le plus radialement extérieur de la tringle étant au moins égale à 0.5 fois la hauteur de section du pneumatique, et la distance radiale entre l'extrémité de chaque couche non retournée et le point le plus radialement extérieur de la tringle étant au plus égale au diamètre de la tringle.

Par conséquent, une solution alternative est nécessaire pour résoudre le problème d'utilisation d'un pneumatique pour véhicule agricole automoteur à forte flexion.

Les inventeurs se sont donc donnés pour objectif d'améliorer l'endurance de l'armature de carcasse d'un pneumatique pour véhicule agricole automoteur, lorsque le pneumatique est soumis à une forte flexion.

Cet objectif a été atteint, selon l'invention, par un pneumatique pour véhicule lourd de type agricole automoteur comprenant :
- une bande de roulement, de largeur A, reliée par l'intermédiaire de deux flancs à deux bourrelets, destinés à assurer une liaison mécanique avec une jante, de largeur L,
- une armature de renforcement, comprenant une armature de sommet, radialement intérieure à la bande de roulement, et une armature de carcasse, radialement intérieure à l'armature de sommet,
- l'armature de carcasse comprenant au moins deux couches de carcasse retournées et au moins deux couches de carcasse non retournées,
- chaque couche de carcasse retournée, constituée d'éléments de renforcement parallèles entre eux, et comprenant une partie principale s'enroulant, dans chaque bourrelet, de l'intérieur vers l'extérieur du pneumatique autour d'une tringle, de diamètre D, pour former un retournement dont l'extrémité est positionnée radialement à l'extérieur du point le plus radialement extérieur de la tringle à une distance radiale,
- chaque couche de carcasse non retournée, constituée d'éléments de renforcement parallèles entre eux, dont l'extrémité est positionnée à une distance radiale du point le plus radialement extérieur de la tringle,
- la section méridienne du pneumatique, selon un plan méridien passant par l'axe de rotation du pneumatique, ayant une hauteur de section H et une largeur de section S,
la distance radiale entre l'extrémité du retournement de chaque couche de carcasse retournée et le point le plus radialement extérieur de la tringle étant au moins égale à 0.5 fois la hauteur de section H du pneumatique et la distance radiale entre l'extrémité de chaque couche de carcasse non retournée et le point le plus radialement extérieur de la tringle étant au plus égale au diamètre D de la tringle.

Les normes ETRTO spécifient un certain nombre de caractéristiques vis-à-vis des pneumatiques pour véhicule agricole. Un pneumatique pour véhicule agricole automoteur est destiné à être monté sur une jante de diamètre au moins égal à 24 pouces. Son rapport de forme H/S théorique entre la hauteur de section théorique H, appelée hauteur de section H, et la largeur de section théorique ou de design S, appelée largeur de section S, est actuellement comprise entre 0.60 et 0.85, de manière non limitative. Un tel pneumatique est destiné à être gonflé à une pression de gonflage recommandée au plus égale à 2.4 bars, selon sa dimension et son utilisation.

Une distance radiale entre l'extrémité du retournement de chaque couche de carcasse retournée et le point le plus radialement extérieur de la tringle au moins égale à 0.5 fois la hauteur de section H du pneumatique implique un retournement long. L'extrémité d'un retournement long est ainsi positionnée hors de la partie médiane du flanc, qui est une zone de flexion à forte courbure. Les sollicitations mécaniques en extrémité du retournement sont alors limitées, ce qui améliore l'endurance en extrémité du retournement.

Un retournement long, présent sur toute la hauteur du flanc, contribue également à la rigidité structurelle du pneumatique. Cette augmentation de la rigidité structurelle, due à la présence du retournement sur toute la hauteur du flanc, contribue également à l'amélioration de l'endurance de l'armature de carcasse en cas de forte flexion.

Une distance radiale entre l'extrémité de chaque couche de carcasse non retournée et le point le plus radialement extérieur de la tringle au plus égale au diamètre D de la tringle implique que l'extrémité de la couche non retournée est proche de la tringle. Le diamètre D de la tringle est le diamètre du cercle circonscrit à la section méridienne de la tringle. En pratique, l'extrémité de la couche de carcasse non retournée est positionnée radialement à l'extérieur du point le plus radialement extérieur de la tringle, c'est-à-dire du point le plus radialement extérieur du cercle circonscrit à la section méridienne de la tringle. Compte tenu des tolérances de fabrication, cette extrémité peut également être positionnée radialement à l'intérieur du point le plus radialement extérieur de la tringle. Dans tous les cas, la distance radiale entre l'extrémité de la couche de carcasse non retournée et le point le plus radialement extérieur de la tringle doit avoir une valeur maximale au plus égale au diamètre D.

Un positionnement de l'extrémité de la couche non retournée sensiblement au niveau du point le plus radialement extérieur de la tringle permet à l'extrémité d'être positionnée en dehors de la zone de flexion du bourrelet sur jante et en dehors de la zone de fort serrage du bourrelet contre la jante, zones dans lesquelles l'extrémité de la couche de carcasse non retournée serait soumise à des sollicitations mécaniques élevées, pénalisantes en endurance.

Un positionnement de l'extrémité de la couche non retournée sensiblement au niveau du point le plus radialement extérieur de la tringle permet également à ladite couche non retournée d'être présente sur toute la hauteur du flanc et de contribuer ainsi à la rigidité structurelle du pneumatique. Cette augmentation de la rigidité structurelle, due à la présence de la couche non retournée, contribue également à l'amélioration de l'endurance de l'armature de carcasse en cas de forte flexion.

La distance radiale entre l'extrémité du retournement de chaque couche de carcasse retournée et le point le plus radialement extérieur de la tringle est avantageusement au plus égale à 0.85 fois la hauteur de section H du pneumatique. Cette caractéristique implique que l'extrémité du retournement est positionnée en-dehors de la zone de sommet, et que le retournement ne participe pas au fonctionnement mécanique de l'armature de sommet.

Les au moins deux couches de carcasse non retournées de l'armature de carcasse sont selon l'invention axialement extérieures, au niveau des flancs, aux parties principales des deux couches de carcasse retournées. Cette configuration permet un assemblage plus aisé des couches d'armature de carcasse en fabrication.

Selon l'invention l'extrémité de la couche de carcasse non retournée la plus axialement extérieure est intercalée entre les retournements respectifs de deux couches de carcasse retournées. Une telle configuration entraîne un couplage mécanique sur les deux faces de la couche de carcasse non retournée avec les retournements adjacents respectifs des deux carcasses retournées, ce qui augmente la rigidité structurelle du pneumatique et donc améliore son endurance.

Il est également avantageux que l'extrémité de la couche de carcasse non retournée la plus axialement intérieure soit axialement intérieure aux retournements respectifs de deux couches de carcasse retournées.

Une configuration particulièrement avantageuse est celle où une première couche non retournée, la plus axialement extérieure, a une extrémité intercalée entre les retournements respectifs des deux couches retournées, et où une deuxième couche non retournée, la plus axialement intérieure, a une extrémité axialement intérieure aux retournements respectifs de deux couches de carcasse retournées et à la tringle. Dans ce cas, la fibre neutre du bourrelet, assimilé à une poutre en flexion, passe sensiblement par le milieu du bourrelet. Ceci induit, dans le bourrelet, une répartition sensiblement symétrique des contraintes de flexion entre la portion d'armature de carcasse axialement la plus intérieure et la portion d'armature de carcasse axialement la plus extérieure. La portion d'armature de carcasse axialement la plus intérieure est constituée par les parties principales des deux carcasses retournées et la deuxième couche de carcasse non retournée, la plus axialement intérieure. La portion d'armature de carcasse axialement la plus extérieure est constituée par les retournements des deux carcasses retournées et la première couche de carcasse non retournée, la plus axialement extérieure.

Les éléments de renforcement d'une couche de carcasse d'un pneumatique agricole sont généralement en textile. En effet le textile est un matériau économique et bien adapté au procédé de fabrication du pneumatique.

Les éléments de renforcement d'une couche de carcasse d'un pneumatique agricole sont avantageusement en polyester. Le polyester est en effet un matériau textile qui présente un compromis intéressant entre ses propriétés mécaniques et son coût.

La section méridienne du pneumatique ayant une flèche de sommet B, la largeur de bande de roulement A est avantageusement au plus égale à 20 fois la flèche de sommet B, de préférence au plus égale à 16 fois la flèche de sommet B.

On définit la flèche de sommet B comme la distance radiale entre le point de la surface de roulement le plus radialement extérieur, positionné dans le plan équatorial du pneumatique, et les points d'extrémité axiale de la surface de roulement, cette distance radiale étant mesurée usuellement sur une coupe méridienne du pneumatique. On définit la largeur de bande de roulement A comme la distance axiale entre les points d'extrémité axiale de la surface de roulement, qui sont les points de dernier contact de la surface de roulement avec un sol plan lorsque le pneumatique, gonflé à sa pression de gonflage recommandée, est écrasé sous une charge égale à la charge recommandée. Cette largeur de bande de roulement peut être mesurée sur une empreinte encrée du pneumatique, soumis à la pression et à la charge recommandées, et est définie par la largeur de cette empreinte encrée.

Cette caractéristique de rapport entre la largeur de bande de roulement A et la flèche de sommet B conditionne la courbure méridienne de la surface de roulement. Une optimisation de la courbure méridienne de la surface de roulement permet de garantir une répartition des pressions au sol limitant le compactage du sol et une motricité en champ satisfaisante. Cette courbure méridienne est optimisée vis-à-vis de la conception de l'armature de sommet, et en particulier de la nature du matériau constitutif des couches éléments de renforcement des couches de sommet, généralement métallique pour un pneumatique de véhicule agricole automoteur.

Il est encore avantageux que la largeur de bande de roulement A soit au moins égale à 10 fois la flèche de sommet B. Une valeur minimale de cette caractéristique permet d'obtenir un profil méridien de la surface de roulement suffisamment plat pour garantir une répartition des pressions au sol limitant le compactage du sol et une usure satisfaisante.

La largeur de section S du pneumatique est avantageusement au plus égale à 1.4 fois la largeur L de jante. Comme vu précédemment, la largeur de section S du pneumatique est définie comme la largeur de section théorique ou de design au sens de la norme ETRTO. La largeur L de jante est également définie par la norme ETRTO. Cette caractéristique implique une section pas trop large, par rapport à la jante, de façon à garantir une rigidité radiale du flanc suffisante.

Il est également avantageux que la largeur de section S du pneumatique soit au moins égale à 1.1 fois la largeur L de jante. Cette caractéristique implique une section suffisamment large, par rapport à la jante, pour garantir la flexion de chaque flanc, vers l'extérieur du pneumatique, sans risque d'instabilité mécanique ou flambement.

La largeur de bande de roulement A est avantageusement au plus égale à 0.95 fois la largeur de section S du pneumatique. Une largeur de bande de roulement maximale, par rapport au boudin la largeur de section, garantit une flexion de chaque flanc sans risque d'instabilité mécanique ou flambement, et par conséquent une capacité de flexion améliorée en cas de surcharge.

Il est enfin avantageux que la largeur de bande de roulement A soit au moins égale à 0.75 fois la largeur de section S du pneumatique. Cette largeur de bande de roulement minimale garantit un volume de bande de roulement à user minimale, nécessaire à l'atteinte de l'objectif de durée de vie en usure du pneumatique.

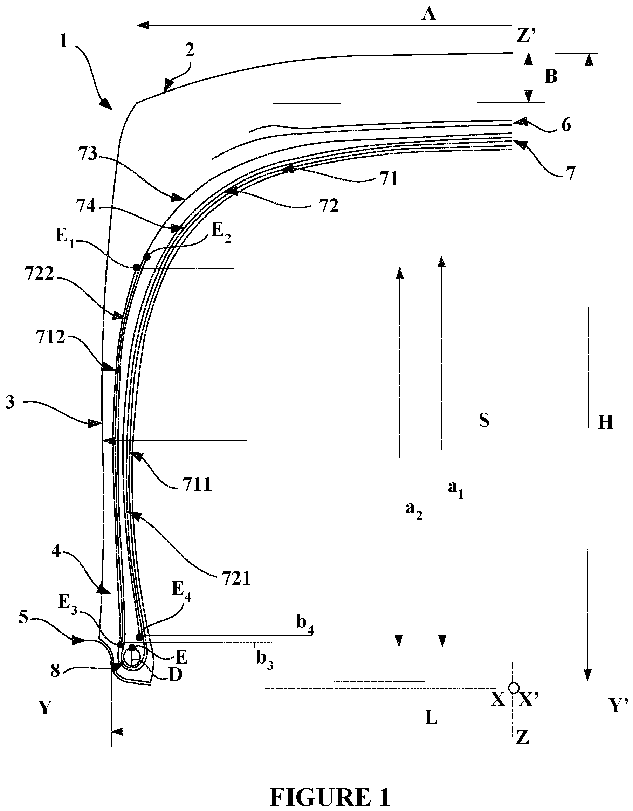

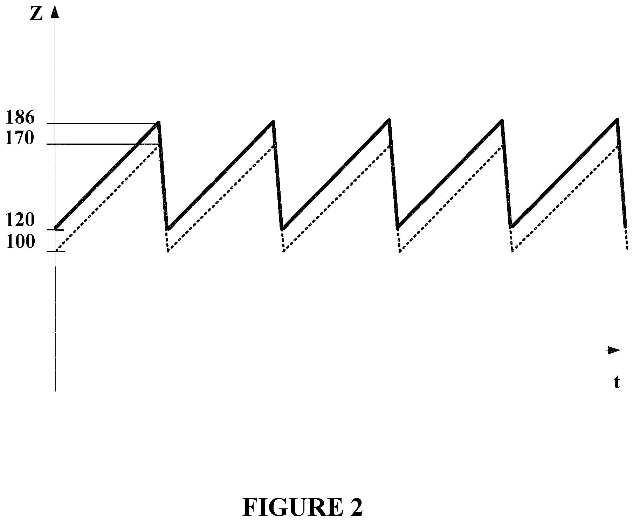

Les caractéristiques de l'invention seront mieux comprises à l'aide des figures 1 et 2 :
- la figure 1 représente une demi-coupe méridienne d'un pneumatique pour véhicule agricole automoteur selon l'invention
- la figure 2 présente un comparatif entre les charges cycliques auxquelles sont soumis respectivement un pneumatique selon l'invention et un pneumatique de référence de l'état de la technique.

Sur la figure 1, est représentée une demi-coupe méridienne d'un pneumatique 1 pour véhicule lourd de type agricole automoteur, cette demi-coupe méridienne n'étant pas à l'échelle pour en faciliter la compréhension. Les axes (XX'), (YY') et (ZZ') représentent respectivement les directions circonférentielle, axiale et radiale. La bande de roulement 2, de largeur A, est reliée par l'intermédiaire de deux flancs 3 à deux bourrelets 4, destinés à assurer une liaison mécanique avec une jante 5, de largeur L. L'armature de sommet 6 est radialement intérieure à la bande de roulement 2. L'armature de carcasse 7 est radialement intérieure à l'armature de sommet 6.

L'armature de carcasse 7 comprend deux couches de carcasse retournées (71, 72) et deux couches de carcasse non retournées (73, 74). Chaque couche de carcasse retournée (71, 72), constituée d'éléments de renforcement parallèles entre eux, comprend une partie principale (711, 721) s'enroulant, dans chaque bourrelet 4, de l'intérieur vers l'extérieur du pneumatique autour d'une tringle 8, de diamètre D, pour former un retournement (712, 722) dont l'extrémité (E₁, E₂) est positionnée radialement à l'extérieur du point E le plus radialement extérieur de la tringle 8 à une distance radiale (a₁, a₂). Chaque couche de carcasse non retournée (73, 74), constituée d'éléments de renforcement parallèles entre eux, a une extrémité (E₃, E₄) positionnée à une distance radiale (b₃, b₄) du point E le plus radialement extérieur de la tringle 8.

En outre, au niveau des flancs 3, les deux couches de carcasse non retournées (73, 74) sont axialement extérieures aux parties principales (711, 721) des deux couches de carcasse retournées (71, 72) et axialement intérieures aux retournements (712, 722) des deux couches de carcasse retournées (71, 72). De plus, dans le cas présent, l'extrémité (E₃) de la couche de carcasse non retournée (73) la plus axialement extérieure est intercalée entre les retournements respectifs (712, 722) de deux couches de carcasse retournées (71, 72) : la couche de carcasse non retournée (73) est dite prise en sandwich entre les retournements (712, 722) respectifs des deux couches de carcasse retournées (71, 72). L'extrémité (E₄) de la couche de carcasse non retournée (74) la plus axialement intérieure est, quant à elle, intercalée entre la tringle 8 et les parties principales (711, 721) des deux couches de carcasse retournées (71, 72).

La section méridienne du pneumatique, selon un plan méridien passant par l'axe de rotation du pneumatique a une hauteur de section H et une largeur de section S.

Conformément à l'invention, la distance radiale (a₁, a₂) entre l'extrémité (E₁, E₂) du retournement (712, 722) de chaque couche de carcasse retournée (71, 72) et le point E le plus radialement extérieur de la tringle 8 est au moins égale à 0.5 fois la hauteur de section H du pneumatique et la distance radiale (b₃, b₄) entre l'extrémité (E₃, E₄) de chaque couche de carcasse non retournée (73, 74) et le point E le plus radialement extérieur de la tringle 8 est au plus égale au diamètre D de la tringle 8.

La figure 2 présente deux courbes respectivement relatives à un pneumatique selon l'invention, en traits pleins, et à un pneumatique de référence de l'état de la technique, en traits pointillés. Chaque courbe représente la charge cyclique à laquelle est soumis un tel pneumatique équipant l'essieu avant d'un véhicule agricole automoteur, tel qu'une moissonneuse-batteuse. Pour un pneumatique de l'état de la technique gonflé à une pression de gonflage égale à 1.15 la pression de gonflage recommandée, initialement la charge est égale à la charge recommandée, correspondant à l'indice 100, puis elle augmente de 70%, jusqu'à l'indice 170, au fur et à mesure que le véhicule progresse dans le champ et effectue la récolte, ce qui augmente la charge sur le pneumatique. Lorsque le véhicule décharge sa cargaison, la charge décroît jusqu'à la charge initiale à l'indice 100. On observe ainsi des cycles de charge et de décharge du pneumatique. Dans le cas du pneumatique selon l'invention gonflé à la pression de gonflage recommandée, la charge initiale est augmentée de 20% par rapport à la charge initiale du pneumatique de l'état de la technique, ce qui correspond à l'indice 120 , et le maximum de charge atteint l'indice 186, soit une surcharge de 86%.

L'invention a été en particulier étudiée dans le cas d'un pneumatique pour véhicule agricole automoteur de dimension 800/70 R 32, dont le rapport de forme H/S théorique entre la hauteur de section H et la largeur de section S est égal à 0.70. Ce pneumatique comprend une armature de carcasse comprenant deux couches de carcasse retournées et deux couches de carcasse non retournées, telle que décrites par la figure 1.

Les distances radiales (a₁, a₂) entre les extrémités (E₁, E₂) des retournements (712, 722) des couches de carcasse retournées (71, 72) et le point E le plus radialement extérieur de la tringle 8 sont respectivement égales à 0,58 fois et 0.59 fois la hauteur de section H du pneumatique, donc au moins égales à 0.5 fois la hauteur de section H du pneumatique. Les distance radiales (b₃, b₄) entre les extrémités (E₃, E₄) respectives des couches de carcasse non retournées (73, 74) et le point E le plus radialement extérieur de la tringle 8 sont respectivement égales à 0.24 fois et 0.0005 fois le diamètre D de la tringle 8, donc au plus égales au diamètre de la tringle 8. Les éléments de renforcement de toutes les couches de carcasse (71, 72, 73, 74) sont en polyester.

La largeur de bande de roulement A est égale à 13.35 fois la flèche de sommet B, donc au plus égale à 20 fois et au moins égale à 10 fois la flèche de sommet B. La largeur de section S du pneumatique est égale à 1.17 fois la largeur L de jante, donc au plus égale à 1.4 fois et au moins égale à 1.1 fois la largeur L de jante. La largeur de bande de roulement A est égale à 0.88 fois la largeur de section S du pneumatique, donc au plus égale à 0.95 fois et au moins égale à 0.75 fois la largeur de section S du pneumatique.

Les essais réalisés sur un pneumatique de dimension 800/70 R 32 selon l'invention, tel que caractérisé précédemment, ont montré que l'endurance de l'armature de carcasse de ce pneumatique, soumis à des charges cycliques comprises entre 1.2 fois et 1.86 fois la capacité de charge recommandée du pneumatique de référence, pour une pression égale à la pression du pneumatique de référence, était du même niveau que celle de l'armature de carcasse du pneumatique de référence, soumis à des charges cycliques comprises entre 1 fois et 1.70 fois la capacité de charge recommandée du pneumatique de référence, pour une pression égale à 1.16 fois la pression du pneumatique de référence.

## Revendications

1. Pneumatique (1) pour véhicule lourd de type agricole automoteur comprenant :
- une bande de roulement (2), de largeur A, reliée par l'intermédiaire de deux flancs (3) à deux bourrelets (4), destinés à assurer une liaison mécanique avec une jante (5), de largeur L,
- une armature de renforcement, comprenant une armature de sommet (6), radialement intérieure à la bande de roulement (2), et une armature de carcasse (7), radialement intérieure à l'armature de sommet (6),
- l'armature de carcasse (7) comprenant au moins deux couches de carcasse retournées (71, 72) et au moins deux couches de carcasse non retournées (73, 74),
- chaque couche de carcasse retournée (71, 72), constituée d'éléments de renforcement parallèles entre eux, et comprenant une partie principale (711, 721) s'enroulant, dans chaque bourrelet (4), de l'intérieur vers l'extérieur du pneumatique autour d'une tringle (8) de diamètre D, pour former un retournement (712, 722) dont l'extrémité (E₁, E₂) est positionnée radialement à l'extérieur du point (E) le plus radialement extérieur de la tringle (8) à une distance radiale (a₁, a₂),
- chaque couche de carcasse non retournée (73, 74), constituée d'éléments de renforcement parallèles entre eux, dont l'extrémité (E₃, E₄) est positionnée à une distance radiale (b₃, b₄) du point (E) le plus radialement extérieur de la tringle (8),
- la section méridienne du pneumatique, selon un plan méridien passant par l'axe de rotation du pneumatique, ayant une hauteur de section H et une largeur de section S,
où la distance radiale (a₁, a₂) entre l'extrémité (E₁, E₂) du retournement (712, 722) de chaque couche de carcasse retournée (71, 72) et le point (E) le plus radialement extérieur de la tringle (8) est au moins égale à 0.5 fois la hauteur de section H du pneumatique, où la distance radiale (b₃, b₄) entre l'extrémité (E₃, E₄) de chaque couche de carcasse non retournée (73, 74) et le point (E) le plus radialement extérieur de la tringle (8) est au plus égale au diamètre D de la tringle (8), où les au moins deux couches de carcasse non retournées (73, 74) de l'armature de carcasse (7) sont axialement extérieures, au niveau des flancs (3), aux parties principales (711, 721) des deux couches de carcasse retournées (71, 72) **et** où l'extrémité (E₃) de la couche de carcasse non retournée (73) la plus axialement extérieure est intercalée entre les retournements respectifs (712, 722) de deux couches de carcasse retournées (71, 72).

2. Pneumatique (1) selon la revendication 1, **dans lequel** la distance radiale (a₁, a₂) entre l'extrémité (E₁, E₂) du retournement (712, 722) de chaque couche de carcasse retournée (71, 72) et le point (E) le plus radialement extérieur de la tringle (8) est au plus égale à 0.85 fois la hauteur de section H du pneumatique.

3. Pneumatique (1) selon l'une quelconque des revendications 1 à 2, **dans lequel** l'extrémité (E₄) de la couche de carcasse non retournée (74) la plus axialement intérieure est axialement intérieure aux retournements respectifs (712, 722) de deux couches de carcasse retournées (71, 72).

4. Pneumatique (1) selon l'une quelconque des revendications 1 à 3, **dans lequel** les éléments de renforcement d'une couche de carcasse (71, 72, 73, 74) sont en textile.

5. Pneumatique (1) selon l'une quelconque des revendications 1 à 4, **dans lequel** les éléments de renforcement d'une couche de carcasse (71, 72, 73, 74) sont en polyester.

6. Pneumatique (1) selon l'une quelconque des revendications 1 à 5, la section méridienne du pneumatique ayant une flèche de sommet B, **dans lequel** la largeur de bande de roulement A est au plus égale à 20 fois la flèche de sommet B, de préférence au plus égale à 16 fois la flèche de sommet B.

7. Pneumatique (1) selon l'une quelconque des revendications 1 à 6, la section méridienne du pneumatique ayant une flèche de sommet B, **dans lequel** la largeur de bande de roulement A est au moins égale à 10 fois la flèche de sommet B.

8. Pneumatique (1) selon l'une quelconque des revendications 1 à 7, **dans lequel** la largeur de section S du pneumatique est au plus égale à 1.4 fois la largeur L de jante.

9. Pneumatique (1) selon l'une quelconque des revendications 1 à 8, **dans lequel** la largeur de section S du pneumatique est au moins égale à 1.1 fois la largeur L de jante.

10. Pneumatique (1) selon l'une quelconque des revendications 1 à 9, **dans lequel** la largeur de bande de roulement A est au plus égale à 0.95 fois la largeur de section S du pneumatique.

11. Pneumatique (1) selon l'une quelconque des revendications 1 à 10, **dans lequel** la largeur de bande de roulement A est au moins égale à 0.75 fois la largeur de section S du pneumatique.

## Patentansprüche

1. Luftreifen (1) für Schwerlastfahrzeug des landwirtschaftlichen Typs mit Eigenantrieb, der Folgendes umfasst:
- ein Laufband (2) mit Breite A, das über zwei Seitenflächen (3) mit zwei Wulsten (4) verbunden ist, die dazu bestimmt sind, eine mechanische Verbindung mit einer Felge (5) mit Breite L sicherzustellen,
- eine Verstärkungsarmierung, die eine obere Armierung (6) radial innerhalb des Laufbandes (2) und eine Karkassenarmierung (7) radial innerhalb der oberen Armierung (6) enthält,
- wobei die Karkassenarmierung (7) wenigstens zwei umgelenkte Karkassenschichten (71, 72) und wenigstens zwei nicht umgelenkte Karkassenschichten (73, 74) enthält,
- wobei jede umgelenkte Karkassenschicht (71, 72) aus zueinander parallelen Verstärkungselementen gebildet ist und einen Hauptabschnitt (711, 721) enthält, der in jedem Wulst (4) von der Innenseite zur Außenseite des Luftreifens um ein Seil (8) mit Durchmesser (D) verläuft, um eine Umlenkung (712, 722) zu bilden, deren Ende (E₁, E₂) radial außerhalb des radial äußersten Punkts (E) des Seils (8) in einem radialen Abstand (a₁, a₂) positioniert ist,
- wobei jede nicht umgelenkte Karkassenschicht (73, 74) aus zueinander parallelen Verstärkungselementen gebildet ist, deren Ende (E₃, E₄) in einem radialen Abstand (b₃, b₄) von dem radial äußersten Punkt (E) des Seils (8) positioniert ist,
- wobei der Meridianquerschnitt des Luftreifens in einer Meridianebene, die durch die Drehachse des Luftreifens verläuft, eine Querschnittshöhe H und eine Querschnittsbreite S besitzt, wobei der radiale Abstand (a₁, a₂) zwischen dem Ende (E₁, E₂) der Umlenkung (712, 722) jeder umgelenkten Karkassenschicht (71, 72) und dem radial äußersten Punkt (E) des Seils (8) wenigstens gleich der 0,5-fachen Querschnittshöhe H des Luftreifens ist, wobei der radiale Abstand (b₃, b₄) zwischen dem Ende (E₃, E₄) jeder nicht umgelenkten Karkassenschicht (73, 74) und dem radial äußersten Punkt (E) des Seils (8) höchstens gleich dem Durchmesser D des Seils (8) ist, wobei sich die wenigstens zwei nicht umgelenkten Karkassenschichten (73, 74) der Karkassenarmierung (7) auf Höhe der Seitenflächen (3) außerhalb der Hauptabschnitte (711, 721) der beiden umgelenkten Karkassenschichten (71, 72) befinden und wobei das Ende (E₃) der axial äußersten nicht umgelenkten Karkassenschicht (73) zwischen die jeweiligen Umlenkungen (712, 722) der beiden umgelenkten Karkassenschichten (71, 72) eingefügt ist.

2. Luftreifen (1) nach Anspruch 1, wobei der radiale Abstand (a₁, a₂) zwischen dem Ende (E₁, E₂) der Umlenkung (712, 722) jeder umgelenkten Karkassenschicht (71, 72) und dem radial äußersten Punkt (E) des Seils (8) höchstens gleich der 0,85-fachen Querschnittshöhe H des Luftreifens ist.

3. Luftreifen (1) nach einem der Ansprüche 1 bis 2, wobei sich das Ende (E₄) der axial innersten nicht umgelenkten Karkassenschicht (74) axial innerhalb der jeweiligen Umlenkungen (712, 722) der beiden umgelenkten Karkassenschichten (71, 72) befindet.

4. Luftreifen (1) nach einem der Ansprüche 1 bis 3, wobei die Verstärkungselemente einer Karkassenschicht (71, 72, 73, 74) aus einem Textilmaterial sind.

5. Luftreifen (1) nach einem der Ansprüche 1 bis 4, wobei die Verstärkungselemente einer Karkassenschicht (71, 72, 73, 74) aus Polyester sind.

6. Luftreifen (1) nach einem der Ansprüche 1 bis 5, wobei der Meridianquerschnitt des Luftreifens eine Oberseitenwölbungshöhe B besitzt, wobei die Breite des Laufbandes A höchstens gleich der 20-fachen Oberseitenwölbungshöhe B, vorzugsweise höchstens gleich der 16-fachen Oberseitenwölbungshöhe B ist.

7. Luftreifen (1) nach einem der Ansprüche 1 bis 6, wobei der Meridianquerschnitt des Luftreifens eine Oberseitenwölbungshöhe B besitzt und wobei die Breite des Laufbandes A wenigstens gleich der 10-fachen Oberseitenwölbungshöhe B ist.

8. Luftreifen (1) nach einem der Ansprüche 1 bis 7, wobei die Querschnittsbreite S des Luftreifens höchstens gleich der 1,4-fachen Breite L der Felge ist.

9. Luftreifen (1) nach einem der Ansprüche 1 bis 8, wobei die Querschnittsbreite S des Luftreifens wenigstens gleich der 1,1-fachen Breite L der Felge ist.

10. Luftreifen (1) nach einem der Ansprüche 1 bis 9, wobei die Breite des Laufbandes A höchstens gleich der 0,95-fachen Querschnittsbreite S des Luftreifens ist.

11. Luftreifen (1) nach einem der Ansprüche 1 bis 10, wobei die Breite des Laufbandes A wenigstens gleich der 0,75-fachen Querschnittsbreite S des Luftreifens ist.

## Claims

1. Tyre (1) for a heavy vehicle of the self-propelled agricultural type, comprising:
- a tread (2), of width A, connected by way of two sidewalls (3) to two beads (4) intended to provide a mechanical connection to a rim (5), of width L,
- a reinforcement comprising a crown reinforcement (6), radially on the inside of the tread (2), and a carcass reinforcement (7), radially on the inside of the crown reinforcement (6),
- the carcass reinforcement (7) comprising at least two turned-up carcass layers (71, 72) and at least two non-turned-up carcass layers (73, 74),
- each turned-up carcass layer (71, 72) consisting of mutually parallel reinforcing elements and comprising a main part (711, 721) wrapped, in each bead (4), from the inside of the tyre towards the outside around a bead wire (8) of diameter D, so as to form a turn-up (712, 722) of which the end (E₁, E₂) is positioned radially on the outside of the radially outermost point (E) of the bead wire (8) at a radial distance (a₁, a₂),
- each non-turned-up carcass layer (73, 74) consisting of mutually parallel reinforcing elements, the end (E₃, E₄) of which is positioned at a radial distance (b₃, b₄) from the radially outermost point (E) of the bead wire (8),
- the meridian section of the tyre having, in a meridian plane passing through the rotation axis of the tyre, a section height H and a section width S,
where the radial distance (a₁, a₂) between the end (E₁, E₂) of the turn-up (712, 722) of each turned-up carcass layer (71, 72) and the radially outermost point (E) of the bead wire (8) is at least equal to 0.5 times the section height H of the tyre, where the radial distance (b₃, b₄) between the end (E₃, E₄) of each non-turned-up carcass layer (73, 74) and the radially outermost point (E) of the bead wire (8) is at most equal to the diameter D of the bead wire (8), where the at least two non-turned-up carcass layers (73, 74) of the carcass reinforcement (7) are axially on the outside, at the sidewalls (3), of the main parts (711, 721) of the two turned-up carcass layers (71, 72), and where the end (E₃) of the axially outermost non-turned-up carcass layer (73) is interposed between the respective turn-ups (712, 722) of two turned-up carcass layers (71, 72) .

2. Tyre (1) according to Claim 1, **wherein** the radial distance (a₁, a₂) between the end (E₁, E₂) of the turn-up (712, 722) of each turned-up carcass layer (71, 72) and the radially outermost point (E) of the bead wire (8) is at most equal to 0.85 times the section height H of the tyre.

3. Tyre (1) according to either one of Claims 1 and 2, **wherein** the end (E₄) of the axially innermost non-turned-up carcass layer (74) is axially on the inside of the respective turn-ups (712, 722) of two turned-up carcass layers (71, 72).

4. Tyre (1) according to any one of Claims 1 to 3, **wherein** the reinforcing elements of a carcass layer (71, 72, 73, 74) are made of textile.

5. Tyre (1) according to any one of Claims 1 to 4, **wherein** the reinforcing elements of a carcass layer (71, 72, 73, 74) are made of polyester.

6. Tyre (1) according to any one of Claims 1 to 5, the meridian section of the tyre having a crown deflection B, **wherein** the tread width A is at most equal to 20 times the crown deflection B, preferably at most equal to 16 times the crown deflection B.

7. Tyre (1) according to any one of Claims 1 to 6, the meridian section of the tyre having a crown deflection B, **wherein** the tread width A is at least equal to 10 times the crown deflection B.

8. Tyre (1) according to any one of Claims 1 to 7, **wherein** the section width S of the tyre is at most equal to 1.4 times the rim width L.

9. Tyre (1) according to any one of Claims 1 to 8, **wherein** the section width S of the tyre is at least equal to 1.1 times the rim width L.

10. Tyre (1) according to any one of Claims 1 to 9, **wherein** the tread width A is at most equal to 0.95 times the section width S of the tyre.

11. Tyre (1) according to any one of Claims 1 to 10, **wherein** the tread width A is at least equal to 0.75 times the section width S of the tyre.
